## Europäisches Patentamt

## European Patent Office

## Office européen des brevets

(11) Veröffentlichungsnummer: **0 175 847**
**B1**

(12) **EUROPÄISCHE PATENTSCHRIFT**

(45) Veröffentlichungstag der Patentschrift:
**16.08.89**

(51) Int. Cl.⁴: **C 02 F 11/12, F 26 B 7/00**

(21) Anmeldenummer: **85107153.0**

(22) Anmeldetag: **11.06.85**

(54) Verfahren und Anlage zur indirekten Schlammtrocknung insbesondere von Abwässerschlämmen.

(30) Priorität: **25.09.84 DE 3435094**
     **30.10.84 DE 3439607**

(43) Veröffentlichungstag der Anmeldung:
**02.04.86 Patentblatt 86/14**

(45) Bekanntmachung des Hinweises auf die Patenterteilung:
**16.08.89 Patentblatt 89/33**

(84) Benannte Vertragsstaaten:
**AT BE CH DE FR GB IT LI NL SE**

(56) Entgegenhaltungen:
**EP-A- 0 003 216**
**DE-A- 2 757 783**
**GB-A- 1 210 105**
**NL-A- 6 705 707**

(73) Patentinhaber: **Uhde GmbH, Friedrich-Uhde-Strasse 15, D-4600 Dortmund 1 (DE)**

(72) Erfinder: **Meurer, Peter, Dr. Dipl.-Ing., Wilhelm-Huck-Strasse 39a, D-5804 Herdecke-Ende (DE)**
Erfinder: **Bässler, Jürgen, Dipl.-Ing., Stuchteystrasse 19, D-4600 Dortmund 30 (DE)**
Erfinder: **Steuber, Heinrich, Dipl.-Ing., Friedrich-Ebert-Strasse 7, D-4600 Dortmund 30 (DE)**
Erfinder: **Liebig, Winfried, Dipl.-Ing., Dullrodt 22, D-5860 Iserlohn 15 (DE)**
Erfinder: **Mühlhaus, Ludwig, Dr., Nothweg 52, D-5860 Iserlohn 15 (DE)**

(74) Vertreter: **Patentanwälte Meinke und Dabringhaus Dipl.-Ing. J. Meinke Dipl.-Ing. W. Dabringhaus, Westenhellweg 67, D-4600 Dortmund 1 (DE)**

**Beschreibung**

Die Erfindung richtet sich auf ein Verfahren und eine Anlage zur indirekten Schlammtrocknung, insbesondere zur Trocknung von Abwässerschlämmen, wobei der Schlamm gegebenenfalls mechanisch entwässert und/oder vorgewärmt wird.

Es sind eine Reihe von grundsätzlich einstufigen Trocknungsverfahren von Abwässerschlämmen bekannt, die sich in zwei Kategorien einteilen lassen, nämlich in solche Verfahren mit einer direkten Trocknung und solche mit einer indirekten Trocknung.

Nachteilig bei der direkten Trocknung ist, daß die beim Trocknen entstehenden Brüden mit großen Mengen von zur Trocknung herangezogenen Rauchgasen vermischt werden, was eine aufwendige Abgasbehandlung und eine evtl. Nachverbrennung erforderlich macht. Daraus ergibt sich bei einer Nachverbrennung beispielsweise, daß ein energetischer Vorteil, der durch die Trocknung an sich erreicht werden soll, wieder zunichte gemacht wird. Ist eine Wäsche der Abgase aus der Trocknung vorgesehen, so kann damit der Nachteil verbunden sein, daß trotzdem umweltbelästigende Geruchsstoffe frei werden.

Bei bekannten Verfahren mit indirekter Trocknung erfolgt die Beheizung mittels Dampf oder anderer Wärmeübertragungsmedien, z.B. einem Wärmeübertragungsöl, wobei die Brüden dann bei Umgebungsdruck abgezogen und anschließend kondensiert werden, was bei sehr hohem Energieniveau erfolgen muß mit den damit verbundenen energetischen Nachteilen.

Ein derartiges Verfahren zur Konzentrierung flüssiger Abfälle ist aus der DE-A 2 757 783 bekannt, bei dem die Abfälle indirekt erwärmt, in einem Vakuumverdampfer aufkonzentriert und die dabei entstehenden Brüden in einem Kondensator kondensiert werden, wodurch der Unterdruck im Verdampfer aufrechterhalten wird.

Da bei vielen Schlammverbrennungen Rauchgase nach dem Dampfkessel oder einem Luftvorwärmer mit einer Temperatur von 100–300°C anfallen, ist in den meisten Fällen eine weitere Energierückgewinnung unwirtschaftlich, da die so gewonnene Energie auf einem vergleichsweise niedrigen Temperaturniveau anfällt. Dies insbesondere deswegen, weil bei Normaldruck des Rauchgases ein erheblicher Teil an der zu gewinnenden Energie bei Temperaturen unterhalb von 85°C erst durch die Kondensation des Wasserdampfes anfällt. Diese Energie wird häufig als Fernwärme oder zur Erzeugung von heißem Brauchwasser benutzt.

Weiter sind Vorschläge bekannt, diese Energie mit Hilfe von Wärmepumpen zu nutzen. Der Einsatz von Wärmepumpen ist in diesem Fall aufwendig, insbesondere da der Bedarf an elektrischer Energie beträchtlich ist.

Aufgabe der Erfindung ist, ein Verfahren der eingangs bezeichneten Art anzugeben, mit dem noch diese Energie mit niedrigem Niveau zum Trocknen ausgenutzt werden kann.

Bei einem Verfahren der eingangs bezeichneten Art wird diese Aufgabe gemäß der Erfindung dadurch gelöst, daß in einer Vorstufe die Abwässerschlamme von einem barometrisch aufgestellten Einspritzkondensator vorbehandelt werden und ihnen in einem nachfolgenden Trockner mit gasdicht gekapseltem Schlammraum unter Zwischenschaltung einer weiteren Behandlungsstufe durch Verdampfen Wasser entzogen wird, wobei der Unterdruck im Trockner durch Absaugen der Brüden mittels des Einspritzkondensators erzeugt wird.

Diese Verfahrensweise hat erhebliche Vorteile. Ein wesentlicher Vorteil besteht darin, daß durch die Trocknung bei Unterdruck eine Beheizung des Trockners, z.B. kann es sich dabei um einen Dünnschichtverdampfer handeln, durch Abdampf möglich wird. Die Erzeugung des Unterdruckes durch einen Einspritzkondensator mittels Absaugen der Brüden aus dem Trockner hat den erheblichen Vorteil, daß die Brüden dort sofort kondensiert werden, so daß Belästigungen der Umwelt nicht stattfinden können. Der geringe Anteil nicht kondensierbarer Stoffe wird mittels eines Vakuumgebläses abgesaugt und der nachgeschalteten Verbrennung zugeführt.

In Ausgestaltung sieht die Erfindung vor, daß der Unterdruck im Bereich kleiner 0,3 bar absolut eingestellt wird.

Wenn beispielsweise die Brüden im Einspritzkondensator bei einer mittleren Temperatur von 40°C kondensieren, so stellt sich im Trockner schlammseitig ein Druck ein, der nur um die Druckverluste der Zuführungsleitung zwischen diesen beiden Aggregaten höher ist. Damit wird erreicht, daß sich schlammseitig im Trockner eine Siedetemperatur von beispielsweise 45–50°C einstellt und nur geringfügig höher ist als diejenige im Einspritzkondensator.

Die Erfindung sieht vor, daß die Brüden von einem barometrisch aufgestellten Einspritzkondensator, der von Rohschlamm, Abwasser oder Kühlwasser beaufschlagt ist, abgesaugt und dort kondensiert werden. Der Mischkondensator kann beispielsweise 10 Meter über dem Boden aufgestellt sein, um ohne weitere Hilfsmittel durch Beaufschlagung mit dem Rohschlamm oder mit Abwasser den notwendigen Unterdruck zu erzeugen. Es werden nur die nicht kondensierbaren Stoffe mit einem Vakuumgebläse abgezogen, um einen allmählichen Druckanstieg zu vermeiden.

Eine Vergleichsüberlegung zeigt, daß bei herkömmlicher Beheizung des Trockners mit Dampf von beispielsweise 7 bar und 164°C und bei schlammseitig herrschendem Umgebungsdruck, eine Temperaturdifferenz von 64°C zur Verfügung steht, während bei einer Siedetemperatur im Kondensator von 45°C und einer Beheizung des Trockners mittels Dampf von 1,5 bar und 110°C eine wirksame Temperaturdifferenz von 65°C zur Verfügung steht. Damit können Wärmetauscherflächen praktisch gleich groß sein, wobei der Vorteil der Erfindung darin liegt, daß hier billiger Abdampf eingesetzt werden kann, während beim Stand der Technik höherwertige Energie eingesetzt werden muß.

In weiterer Ausgestaltung sieht die Erfindung vor, daß die Trocknung zweistufig erfolgt, wobei die erste Stufe, wie im Hauptanspruch bereits beansprucht, schlammseitig mit Unterdruck und die zweite Stufe schlammseitig mit Normal- oder Überdruck betrieben wird. Für diese Variante wird selbständiger Schutz beansprucht, da die bisher bekanntgewordenen Schlammtrocknungen grundsätzlich einstufig sind. Es hat sich gezeigt, daß die Zweistufigkeit in der beanspruchten Verfahrensweise erhebliche Vorteile mit sich bringt.

Besonders vorteilhaft kann es sein, wenn die erste Stufe mittels eines Wärmeträgers. beispielsweise eines Wärmeträgeröles oder Dampf, beheizt wird. wobei dieser Wärmeträger von den Brüden der zweiten Stufe in einem Wärmetauscher aufgeheizt wird.

Die Zwischenschaltung eines Wärmeträgers hat den Vorteil, daß auch schwer zugängliche Heizflächen in den Wärmetauschern bzw. Trocknern eingesetzt werden können, da die Heizflächen nicht durch die Kondensation der Brüden aus der zweiten Stufe heizmantelseitig verschmutzt werden, was zwangsläufig zu einer Verschlechterung des Wärmeaustausches führen würde.

In besonders zweckmäßiger Ausgestaltung ist auch vorgesehen, daß als Wärmeübertragungsmedium zur indirekten Trocknung ein fluorierter Chlorkohlenwasserstoff. z.B. Trifluortrichloräthan ($C_2Cl_3F_3$) eingesetzt wird.

Dieses Wärmeübertragungsmittel ist deswegen besonders gut geeignet. weil es beispielsweise bei einer Temperatur von 55°C einen Dampfdruck von 1,285 bar aufweist. d.h. also geringfügig über dem Umgebungsdruck liegt.

In Ausgestaltung sieht die Erfindung vor. daß zur Verdampfung des Wärmeübertragungsmediums das Rauchgas nach den Dampfkesseln. gegebenenfalls nach einem Luftvorwärmer aus der Schlammverbrennung eingesetzt wird. Die damit verbundenen Vorteile sind bereits weiter oben angesprochen worden.

Zweckmäßig kann es sein. wenn die Rauchgase in einem Wärmetauscher. insbesondere einem Rippenrohrwärmetauscher. gegen das Wärmeübertragungsmedium bis etwa 60°C abgekühlt werden können. wobei die Erfindung hier auch vorsieht. daß das Wärmeübertragungsmedium im Wärmetauscher bei 50–80°C. vorzugsweise 55–60°C. verdampft wird.

Diese Werte sind besonders zweckmäßig unter den vorhandenen Energieverhältnissen bei den Verbrennungsanlagen angepaßt. Um zu ausreichend guten Trocknungswerten bei der Schlammtrocknung zu kommen. sieht die Erfindung auch vor. daß mit dem Sattdampf des Wärmeübertragungsmediums aus dem Wärmetauscher ein Schlammtrockner beheizt wird. der ein Vakuum von etwa 0.04 bis 0.3 bar Absolutdruck aufweist.

Bei einem derartig niedrigen Vakuum liegt die Siedetemperatur des Schlammwassers bei etwa 28 bis 45°C. Damit steht ein Temperaturgefälle von etwa 20–50°C für die Trocknung zur Verfügung. Das Vakuum wird aufrechterhalten, indem die anfallenden Brüden z.B. in einem mit gereinigtem Abwasser gekühlten Einspritzkondensator kondensiert werden. Inertgase können mit einer Vakuumpumpe abgezogen werden.

Vorteilhaft ist bei der beanspruchten Verfahrensweise. daß das Trifluortrichloräthan dem Trockner bei annähernd gleicher Temperatur kondensiert. bei der auch die Verdampfung erfolgt Die Druckverluste des Systems sind dabei vernachlässigbar. Es ist also kein Kompressor erforderlich. wie es beim Einsatz einer Wärmepumpe der Fall wäre.

Werden andere Betriebsbedingungen gewählt. z.B. ein höherer Siededruck des Kältemittels. so kann dieses überhitzt und anschließend beispielsweise über eine Turbine zur Stromerzeugung entspannt und dann erst zur Heizung des Trockners eingesetzt werden.

An dieser Stelle sei bemerkt. daß die Erfindung nicht auf die oben angelegten Temperaturbereiche beschränkt ist. Hier können die Grenzen schwankend sein je nach den Betriebsbedingungen, wobei die angegebenen Bereiche besonders zweckmäßig sind, um Energien, die heute nutzlos an die Umwelt abgegeben werden. z.B. für die Schlammtrocknung zu nutzen. Selbstverständlich können auch andere Trocknungsvorgänge auf diese Weise beheizt werden.

Die Erfindung sieht auch eine Anlage zur Durchführung des bzw. der Verfahren nach der Erfindung vor. Eine derartige Anlage zeichnet sich insbesondere bei einer einstufigen Verfahrensweise durch einen barometrisch aufgestellten Einspritzkondensator, dem z.B. in Schwerkraftsrichtung ein mechanischer Schlammtrockner nachgeordnet ist. und durch wenigstens einen indirekten Schlammtrockner mit einem gasdicht gekapselten Schlammraum aus, wobei der Gasdom des Schlammraumes über eine Leitung zum Absaugen der Brüden mit einem Einspritzkondensator verbunden ist.

Wird eine zweistufige Verfahrensweise bevorzugt. so zeichnet sich eine derartige Anlage nach der Erfindung zusätzlich dadurch aus, daß dem ersten indirekten Schlammtrockner ein zweiter indirekter Schlammtrockner nachgeordnet ist. wobei zur Beheizung des Wärmeträgers des ersten Schlammtrockners ein mit den Brüden des zweiten Schlammtrockners beheizter Wärmetauscher vorgesehen ist.

Die Erfindung ist nachstehend anhand der Zeichnung beispielsweise näher erläutert. Diese zeigt in

Fig. 1 ein Anlageschaltbild zur Durchführung der erfindungsgemäßen Verfahrensweise sowie in

Fig. 2 ein abgewandeltes Anlageschaltbild.

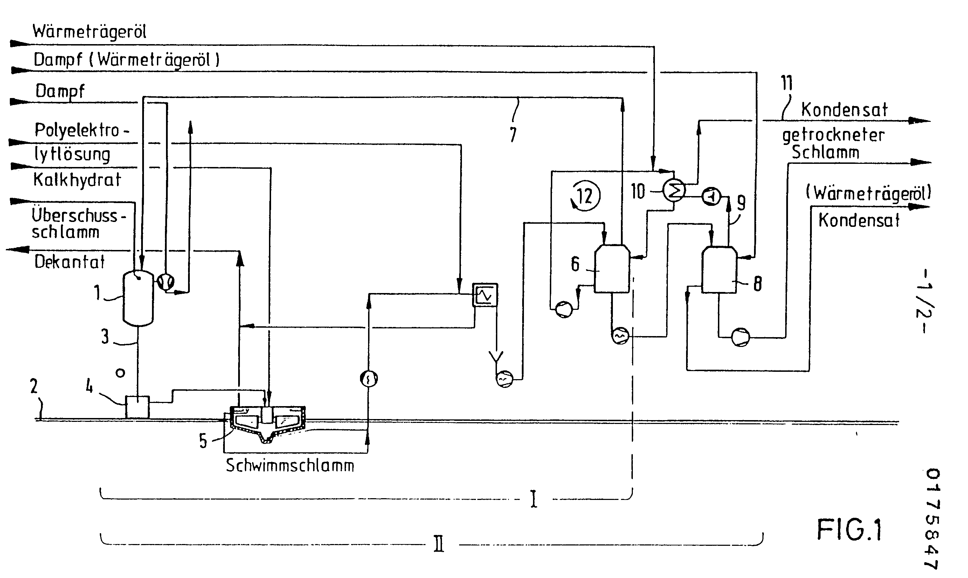

Die als Beispiel in Fig. 1 wiedergegebene Anlage eignet sich zur Durchführung eines einstufigen Trocknungsverfahrens (was mit der Klammer I bezeichnet ist) und für die Durchführung eines zweistufigen Trocknungsverfahrens (dies ist mit der Klammer II angedeutet).

Ein Einspritzkondensator 1 ist barometrisch aufgestellt. d.h. z.B. 10 Meter über dem mit 2 bezeichneten Erdboden. Ihm wird Überschußschlamm zugeführt. was mit der entsprechend bezeichneten Leitung angedeutet ist. Das Ablaufrohr 3 aus dem Einspritzkondensator 1 mündet in einen auf dem Boden 2 stehenden Tauchbehälter 4. Die aus dem Tauchbehälter 4 kommenden Abwässerschlämme werden einer Zentrifuge 5 zugeführt und dort vorentwässert und anschließend über entsprechende Anlageteile einem ersten indirekt beheizten Schlammtrockner 6 zugeleitet.

Der Schlammtrockner 6 ist. was seinen Schlammraum angeht. gasdicht gekapselt.

Über eine Leitung 7 werden die Brüden aus diesem Gasdom abgesogen. und zwar durch Beauf-

schlagung des Gasdomes des Einspritzkondensators 1. Dort werden die Brüden kondensiert.

Bei einer zweistufigen Verfahrensweise werden die im Schlammtrockner 6 vorgetrockneten Schlämme einem weiteren Schlammtrockner 8 zugeführt, dort endgetrocknet und als getrocknete Schlämme abgesogen. Die Brüden verlassen den Gasdom des zweiten Schlammtrockners 8 über eine Leitung 9, beaufschlagen einen Wärmetauscher 10 und verlassen dann über die Leitung 11 die Anlage als Kondensat.

Der Wärmetauscher 10 heizt einen im Kreislauf geführten Wärmeträger. Dieser Kreislauf ist in der Figur als Pfeil 12 angedeutet. Dieser Wärmeträger beheizt dann in diesem Falle den Schlammtrockner 6 indirekt, während der Schlammtrockner 8 z.B. von Dampf indirekt beheizt ist.

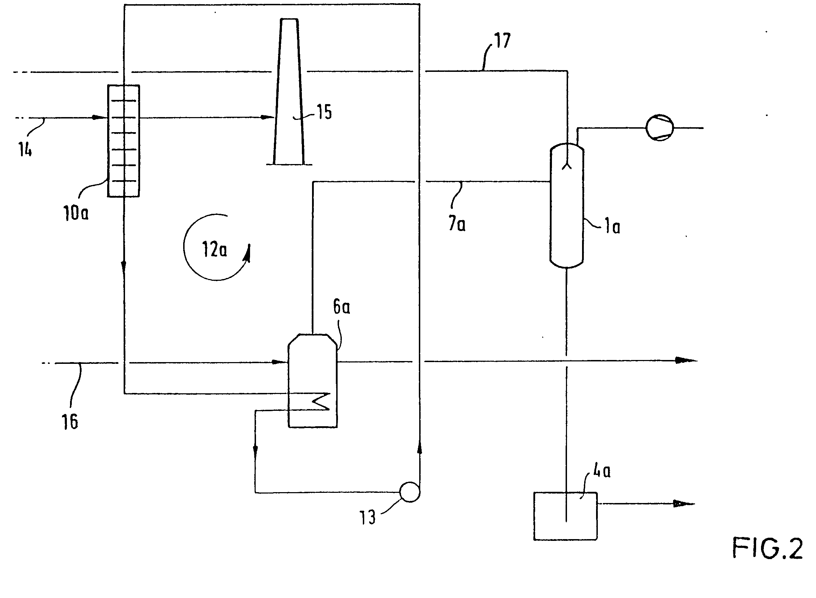

Bei dem in Fig. 2 wiedergegebenen Anlagenschaltbild sind alle mit der Anlage nach Fig. 1 vergleichbaren Elemente mit dem gleichen Bezugszeichen versehen, allerdings durch ein «a» gekennzeichnet, d.h. z.B. daß der den Kreislauf des Wärmeträgers darstellende Pfeil mit 12a in der Mitte der Figur angegeben ist.

Der Kreislauf 12a des Wärmeträgers stellt sich so dar, daß dieser im Schlammtrockner 6a kondensiert und als Kondensat von der Pumpe 13 zum Wärmetauscher 10a gefördert wird, dort verdampft und dann dem Schlammtrockner 6a als Dampf zugeführt wird.

Das zum Verdampfen im Verdampfer 10a benötigte Rauchgas tritt über die Leitung 14 in die Anlage ein und verläßt es beispielsweise über einen nur schematisch angedeuteten Kamin 15. Der Schlamm tritt z.B. über die Leitung 16 in den Trockner 6a ein und verläßt ihn als getrockneter Schlamm. In Anlehnung an die Gestaltung der Anlage nach Fig. 1 ist dort noch die Überschußzufuhrleitung 17 für Abwasser, Schlamm oder Kühlwasser angegeben, die zu einem Einspritzkondensator 1a führt, mit dessen Hilfe der Unterdruck im Trockner 6a erzeugbar ist.

Zur Veranschaulichung sei ein Verfahrensbeispiel beschrieben:

Abwässerschlämme mit einem Feststoffgehalt von üblicherweise 1–10% TS (Trockensubstanz) werden über einen Einspritzkondensator geführt und auf Zentrifugen, Siebbandpressen usw. bis zu einem Feststoffgehalt von 10–35% TS entwässert.

Mit dem vorentwässerten Schlamm wird ein dampf- oder brüdenbeheizter Trockner, z.B. Dünnschichtverdampfer oder Scheibentrockner, beschickt.

Die in diesem Trockner anfallenden Brüden werden in einem Einspritzkondensator bei Temperaturen von 10 bis max. 80°C, vorzugsweise 10 bis 40°C, kondensiert. Damit stellt sich schlammseitig im Trockner ein Druck ein, der nur um die Druckverluste des Systems höher ist als der Dampfdruck von Wasser bei der höchsten Temperatur im Einspritzkondensator.

Dem schlammseitigen Druck im Trockner entspricht eine Siedetemperatur von etwa 25–45°C. Dieser Trockner wird mit Dampf von annähernd Umgebungsdruck (0.8–2 bar) oder Wärmeträgeröl beheizt. Somit stellt sich ein $\Delta t$ von mindestens 40°C ein,

was für eine hinreichende Verdampfungsleistung ausreicht.

Der Dampf zur Beheizung der ersten Stufe in einem Dampfkessel erzeugt, der durch Kondensation der Brüden aus der 2. Stufe in einem speziellen Wärmetauscher beheizt wird.

Wird für den Trockner statt Dampf Wärmeträgeröl verwendet, so wird dieses mit den Brüden aus der 2. Stufe auf eine Temperatur von etwa 90–120°C aufgeheizt.

Die Brüden von der 2. Stufe können mit einem Brüdenverdichter soweit verdichtet werden, daß in der ersten Stufe eine annähernd gleiche Temperaturdifferenz zur Verfügung steht wie in der 2. Stufe (falls beide Stufen mit Dampf beheizt werden).

Der vorgetrocknete Schlamm aus der 1. Stufe wird in der 2. Stufe mit Dampf von etwa 4–15 bar, vorzugsweise 6–12 bar, oder mit Wärmeträgeröl von etwa 120–320°C, vorzugsweise 180–300°C, getrocknet.

Durch dieses Verfahren kann der Fremdenergiebedarf für die Schlammtrocknung etwa auf 60% reduziert werden.

Natürlich sind die beschriebenen Ausführungsbeispiele der Erfindung noch in vielfacher Hinsicht abzuändern, ohne den Grundgedanken der Erfindung zu verlassen. So ist die Erfindung insbesondere nicht auf die dargestellten und beschriebenen Anlageteile beschränkt, hier können auch gleiche oder gleichwirkende Anlageteile eingesetzt werden, die angegebenen Drücke und Temperaturen stellen lediglich Beispiele dar und dergleichen mehr.

**Patentansprüche**

1. Verfahren zur indirekten Schlammtrocknung insbesondere zur Trocknung von Abwässerschlammen, wobei der Schlamm gegebenenfalls mechanisch vorentwässert und/oder vorgewärmt wird, dadurch gekennzeichnet, daß in einer Vorstufe die Abwässerschlämme von einem barometrisch aufgestellten Einspritzkondensator (1) vorbehandelt werden und ihnen in einem nachfolgenden Trockner (6) mit gasdicht gekapseltem Schlammraum unter Zwischenschaltung einer weiteren Behandlungsstufe durch Verdampfen Wasser entzogen wird, wobei der Unterdruck im Trockner (6) durch Absaugen der Brüden mittels des Einspritzkondensators (1) erzeugt wird.

2. Verfahren nach Anspruch 1, dadurch gekennzeichnet, daß der Unterdruck im Bereich kleiner 0.3 bar absolut eingestellt wird.

3. Verfahren nach einem der vorangehenden Ansprüche, dadurch gekennzeichnet, daß die Trocknung zweistufig erfolgt, wobei die erste Stufe schlammseitig mit Unterdruck und die zweite Stufe schlammseitig mit Normal- oder Überdruck betrieben wird.

4. Verfahren nach Anspruch 3, dadurch gekennzeichnet, daß die erste Stufe mittels eines Warmetragers, beispielweise eines Wärmeträgerols beheizt wird, wobei dieser Wärmeträger von den Brüden der zweiten Stufe in einem Wärmetauscher aufgeheizt wird.

5. Verfahren nach Anspruch 1 oder einem der fo-

genden, dadurch gekennzeichnet. daß als Wärmeübertragungsmedium zur indirekten Trocknung fluorierte Chlorkohlenwasserstoffe, wie z.B. Trifluortrichloräthan ($C_2Cl_3F_3$), eingesetzt werden.

6. Verfahren nach Anspruch 5. dadurch gekennzeichnet, daß zur Verdampfung des Wärmeübertragungsmediums das Rauchgas nach dem Dampfkessel und gegebenenfalls nach einem Luftvorwärmer aus der Schlammverbrennung eingesetzt wird.

7. Verfahren nach einem der vorangehenden Ansprüche, dadurch gekennzeichnet, daß die Rauchgase in einem Wärmetauscher, insbesondere einem Rippenrohrwärmetauscher, gegen das Wärmeübertragungsmedium bis größer/gleich 60° C abgekühlt werden.

8. Verfahren nach einem der vorangehenden Ansprüche. dadurch gekennzeichnet, daß das Wärmeübertragungsmedium im Wärmetauscher bei 50–80° C. vorzugsweise 55–60° C, verdampft wird.

9. Verfahren nach Anspruch 1 oder 2, dadurch gekennzeichnet. daß mit dem Sattdampf des Wärmeübertragungsmediums aus dem Wärmetauscher ein Schlammtrockner beheizt wird. der ein Vakuum von etwa 0,04 bis 0.30 bar Absolutdruck aufweist.

10. Verfahren nach einem der vorangehenden Ansprüche. dadurch gekennzeichnet. daß das Warmeübertragungsmedium im Kreislauf geführt wird.

11. Anlage zur Durchführung des Verfahrens nach einem der vorangehenden Ansprüche. gekennzeichnet durch einen barometrisch aufgestellten Einspritzkondensator. dem ein mechanischer Schlammvortrockner zugeordnet ist. und durch wenigstens einen indirekten Schlammtrockner mit einem gasdicht gekapselten Schlammraum. wobei der Gasdom des Schlammraumes über eine Leitung zum Absaugen der Bruden mit dem Einspritzkondensator verbunden ist.

12. Anlage zur Durchführung des Verfahrens nach Anspruch 11. dadurch gekennzeichnet. daß dem ersten indirekten Schlammtrockner ein zweiter indirekter Schlammtrockner nachgeordnet ist. wobei zur Beheizung des Wärmeträgers des ersten Schlammtrockners ein mit den Brüden des zweiten Schlammtrockners beheizter Wärmetauscher vorgesehen ist.

## Claims

1. A process for indirectly drying sludge, in particular for drying sewage sludges. wherein the sludge is optionally mechanically subjected to a preliminary dewatering operation and/or preliminary heating operation. characterised in that in a preliminary stage the sewage slurries are subjected to preliminary treatment by an injection condenser (1) which is set up barometrically and water is removed from the sewage sludges in a subsequent drier (6) with gas-tightly enclosed sludge chamber with the interposition of a further treatment stage by evaporation wherein the reduced pressure in the drier (6) is produced by sucking away the vapours by means of the injection condenser (1).

2. A process according to claim 1 characterised in that the reduced pressure is set in a range of less than 0.3 bar absolute.

3. A process according to one of the preceding claims characterised in that the drying operation is effected in two stages, wherein the first stage is operated on the sludge side with a reduced pressure and the second stage is operated on the sludge side with normal or increased pressure.

4. A process according to claim 3 characterised in that the first stage is heated by means of a heat carrier, for example a heat carrier oil, wherein said heat carrier is heated by the vapours of the second stage in a heat exchanger.

5. A process according to claim 1 ore one of the following claims characterised in that the fluorinated chlorohydrocarbons such as for example trifluorotrichloroethane ($C_2Cl_3F_3$) are used as the heat transfer agent for the indirect drying operation.

6. A process according to claim 5 characterised in that the flue gas downstream of the boiler and possibly an air preheater from combustion of the sludge is used for evaporation of the heat transfer agent.

7. A process according to one of the preceding claims characterised in that the flue gases are cooled to a temperature of higher than/equal to 60° C. to the heat transfer agent, in a heat exchanger. in particular a finned pipe heat exchanger.

8. A process according to one of the preceding claims characterised in that the heat transfer agent is evaporated in the heat exchanger at a temperature of 50 to 80° C, preferably 55 to 60° C.

9. A process according to claim 1 or claim 2 characterised in that a sludge drier which has a vacuum of about 0.04 to 0.30 bar absolute pressure is heated with the saturated vapour of the heat transfer agent from the heat exchanger.

10. A process according to one of the preceding claims characterised in that the heat transfer agent is circulated.

11. Installation for carrying out the process according to one of the preceding claims characterised by an injection condenser which is set up barometrically and with which a mechanical preliminary sludge drier is associated. and by at least one indirect sludge drier with a gas-tightly enclosed sludge chamber. wherein the gas dome of the sludge chamber is connected to the injection condenser by way of a conduit for sucking away the vapours.

12. Installation for carrying out the process according to claim 11 characterised in that a second indirect sludge drier is arranged downstream of the first indirect sludge drier. wherein a heat exchanger which is heated with the vapours of the second sludge drier is provided for heating the heat carrier of the first sludge drier.

## Revendications

1. Procédé de séchage indirect de la boue. notamment pour le séchage de boues d'eaux usées. la boue étant asséchée et/ou préchauffée. éventuellement mécaniquement. caractérisé en ce que les boues d'eaux usées sont préalablement traitées dans un premier étage par un condenseur par injection (1) monté barométriquement. et l'eau en est extraite dans un séchoir subséquent (6) comprenant une enceinte à boue encapsulée de façon étanche aux gaz avec interposition d'un autre étage de traitement par vaporisation, la dépression dans le séchoir (6) étant réalisée par aspiration des vapeurs chaudes au moyen du condenseur par injection (1).

2. Procédé selon la revendication 1, caractérisé en ce que la depression est réglée dans une région inférieure à 0,3 bar absolus.

3. Procédé selon l'une quelconque des revendications précédentes, caractérisé en ce que le séchage s'effectue sur deux étages, le premier étage fonctionnant en dépression du côté de la boue et le second étage fonctionnant à la pression normale ou en surpression du côté de la boue.

4. Procédé selon la revendication 3, caractérisé en ce que le premier étage est chauffé au moyen d'un agent caloporteur, par exemple une huile caloporteuse, cet agent caloporteur étant chauffé par les vapeurs chaudes du second étage dans un échangeur de chaleur.

5. Procédé selon la revendication 1 ou l'une quelconque des revendications suivantes. caractérisé en ce que l'on utilise en tant qu'agent caloporteur pour le séchage indirect de l'hydrocarbure chloré fluoré tel que par exemple du trifluorotrichloroéthane $(C_2Cl_3F_3)$.

6. Procédé selon la revendication 5. caractérisé en ce que pour vaporiser l'agent caloporteur. on utilise du gaz de fumée provenant du brûlage de la boue après la cuve de vaporisation ou éventuellement après un préchauffeur d'air.

7. Procédé selon l'une quelconque des revendications précédentes. caractérisé en ce que les gaz de fumée sont refroidis dans un échangeur de chaleur, notamment un échangeur de chaleur à tubes à ailettes. jusqu'à 60°C ou plus par rapport à l'agent caloporteur.

8. Procédé selon l'une quelconque des revendications précédentes, caractérisé en ce que l'agent caloporteur est vaporisé dans l'échangeur de chaleur à 50–80°C, et de préférence à 55–60°C.

9. Procédé selon la revendication 1 ou 2. caractérisé en ce qu'un séchoir de boue est chauffé par la vapeur saturée de l'agent caloporteur provenant de l'échangeur de chaleur, ce séchoir présentant un vide d'environ 0,04 à 0,30 bars de pression absolue.

10. Procédé selon l'une quelconque des revendications précédentes, caractérisé en ce que l'agent caloporteur circule en circuit fermé.

11. Installation pour la mise en œuvre du procédé selon l'une quelconque des revendications précédentes, caractérisé par un condenseur par injection monté barométriquement, auquel est associé un préséchoir de boue mécanique. et par au moins un séchoir de boue indirect comprenant une enceinte à boue encapsulée de façon étanche aux gaz. le dôme à gaz de l'enceinte à boue étant relié au condenseur par injection par une conduite destinée à l'aspiration des vapeurs chaudes.

12. Installation pour la mise en œuvre du procédé selon la revendication 11. caractérisé en ce qu'un second séchoir de boue indirect est en aval du premier séchoir de boue indirect. un échangeur de chaleur chauffé par les vapeurs chaudes du second séchoir de boue étant prévu pour le chauffage de l'agent caloporteur du premier séchoir de boue.

FIG.1

Wärmeträgeröl

Dampf (Wärmeträgeröl)

Dampf

Polyelektrolytlösung

Kalkhydrat

Überschussschlamm

Dekantat

Schwimmschlamm

Kondensat

getrockneter
Schlamm

(Wärmeträgeröl)

Kondensat

-1/2-

0175847

0175847

FIG.2